# FASCICULE DE BREVET EUROPEEN

(11) **EP 0 963 022 B1**
(45) Date de publication et mention de la délivrance du brevet: **22.10.2003**
(21) Numéro de dépôt: 99401182.3
(22) Date de dépôt: 14.05.1999
(51) Int. Cl.: H02G 15/18

(54) **Procédé et dispositif de pose d'un élément tubulaire rétractable sur un réceptacle, et assemblage ainsi obtenu**
Verfahren und Vorrichtung zum Aufbringen eines rohrförmigen Elements auf ein Aufnahmeteil und daraus resultierende Anordnung
Method and device for placing a tubular element on a receiving part and corresponding assembly

(30) Priorité: 04.06.1998 FR 9807025
(43) Date de publication de la demande: 08.12.1999
(73) Titulaire: Manufacture d'Appareillage Electrique de Cahors, 46000 Cahors (FR)
(72) Inventeur: Vincent, Hélène, 46090 Pradines (FR); Bouny, Noel, 78100 Saint Germain en Laye (FR)
(74) Mandataire: Derambure, Christian

(56) Documents cités:
- EP-A- 0 631 357
- EP-A- 0 797 281
- FR-A- 2 592 825
- US-A- 4 506 430

## Description

L'invention vise un procédé et un dispositif de pose d'un élément tubulaire rétractable sur un réceptacle, et un assemblage ainsi obtenu.

Dans un exemple d'application, le réceptacle est un câble électrique, optique ou autre, à protéger par un manchon ou analogue.

Le domaine technique de l'invention est donc celui des outils de mise en place de douilles élastiques ou éléments rétractables analogues, et des accessoires de câbles.

Le document GB-A-1.292.608 décrit un élément élastique pour recouvrir et isoler un câble électrique.

Pour pouvoir être posé à la main, cet élément élastique est placé en étant fortement tendu sur un tube creux en matériau flexible dur, dans lequel est formée une gorge hélicoïdale, en forme de "V".

Une fois l'élément en position, le tube est évacué en tirant sur une bande constituée par découpage du tube suivant la gorge. Au fur et à mesure de son retrait, le tube maintien sa forme tubulaire - ou conique - et l'élément élastique vient se contracter sur le câble.

La surface externe du tube de support est couverte si nécessaire avec une composition secondaire à faible coefficient de frottement.

Cette composition est par exemple un film de recouvrement isolant, avec des palettes conductrices à relâchement de contrainte, tel que décrit dans le document US-A-3.349.164.

Tandis qu'il est prévu que l'élément élastique soit curé avec une huile de traitement.

Le câble est si nécessaire revêtu de mastic, à la jointure.

Avec une telle technique, les risques de rupture et de mauvaise prise en main de la bande découpée dans le tube sont tels que la pose s'avère parfois difficile.

Tandis que d'un point de vue industriel, la réalisation de la gorge est délicate, et économiquement peu acceptable.

Le document FR-A-2.592.825 décrit un manchon auxiliaire de positionnement, en particulier sur un câble électrique de forte dimension, d'un dispositif comportant au moins un élément annulaire élastique d'enserrement.

Le manchon comprend un tube rigide, rectiligne et creux, à enfiler par coulissement sur le câble.

Il comporte aussi une gaine souple en film à faible coefficient de frottement, fixée périphériquement à l'intérieur d'une extrémité du tube. Une partie du tube non recouverte par la gaine, permet de tirer ce dernier en arrière, tout en maintenant l'élément élastique au dessus de son emplacement définitif.

La gaine se retourne sur elle-même au fur et à mesure du retrait du tube, et l'élément élastique vient se plaquer contre le câble.

Pour être ensuite séparé du câble, le manchon est soit extrait via l'extrémité où il a été introduit. Soit un tube fendu longitudinalement dès l'origine ou une découpe longitudinale est prévu.

Un montage sur la gaine associe dans leurs positions respectives d'installation, des anneaux auxiliaires de type mastic ou isolant.

Avec cette technique, une partie du film reste fréquemment coincée entre le câble et l'élément élastique ou le mastic.

Des bulles d'air sont ainsi piégées et/ou le mastic est altéré. Or en moyenne tension, la présence d'air entre le câble et le mastic, produit un phénomène appelé "décharge partielle", qui détruit à terme l'extrémité du câble.

Le document EP-A-631.357 décrit un tube rigide de pose d'un élément élastique de grande longueur et/ou d'épaisseur importante.

Un moyen de guidage et d'entraînement d'un film à faible coefficient de frottement est monté totalement libre relativement au tube. Ce moyen entraîne le film autour d'une extrémité avant et contre l'intérieur du tube.

Ce moyen de guidage et d'entraînement maintien le film sur le tube, tandis qu'un épaulement largement saillant constitue un moyen de prise en main du tube pour son actionnement.

Ce moyen de guidage et d'entraînement comprend des courroies soit initialement solidaires du film, soit initialement indépendantes du film et solidarisées par collage aux bords du film sur le tube.

Soit encore, ce moyen d'entraînement est un tube rigide auxiliaire intérieur collé au film.

Une ligne d'amorce est prévue pour le dégagement par rupture, du tube auxiliaire ou externe.

Comme dans les autres documents, la mise en place de l'élément élastique s'effectue ici en tirant sur le tube.

Donc, un positionnement précis de l'élément élastique est rendu difficile du fait des risques de déplacement parasite de cet élément, sous l'effet de la traction du tube.

Ce problème est d'autant plus gênant qu'un ou plusieurs éléments supplémentaires tels que bague de mastic ou analogues, doivent être posés avec l'élément principal.

En effet, ces éléments supplémentaires doivent respecter des impératifs d'exactitude de position et de placement de pose, pour qu'ils puissent assumer leur fonction, par exemple d'isolation.

Ainsi, le recouvrement complet - sans air ou vacuole - d'un conducteur électrique dénudé par un élément isolant supplémentaire, et la pose sans torsion - sans provoquer de rides génératrices de perte d'étanchéité -, font partie de ces impératifs à respecter.

Dans la pratique, aucune technique connue ne permet par ailleurs d'assurer que l'effort de pose à fournir soit tel que cette pose puisse être effectuée en toute conditions, sans être fastidieuse.

Notamment, les efforts de pose à fournir sont souvent trop importants lorsque l'accessibilité du côté arrière du tube, ou que les conditions (humidité ambiante, graisse, etc.) de sa prise, est mauvaise.

Tandis que tant d'un point de vue économique que pratique, des épaulements largement saillants, perçages du tube, ou autres moyens connus de prise, sont indésirables.

Du fait de cette nécessité de pouvoir tirer sur le tube, celui-ci est réalisé dans la pratique, de manière massive et interdisant toute fente longitudinale d'origine ou ligne d'amorce de rupture pour son dégagement.

Le dégagement de ce tube s'avère donc lui aussi fastidieux. Ainsi, dans le cas d'un tube long et/ou d'un lieu de pose confiné, ce dégagement oblige parfois à découper le tube.

L'invention vise à pallier ces inconvénients notamment.

Grâce à l'invention, la pose se fait exclusivement à l'aide de moyen de traction sur l'étui, qui sont souples et donc peu coûteux et aisément préhensibles.

En outre, on évite d'avoir à tirer directement sur le tube.

A cet effet, un premier objet de l'invention est un procédé de pose d'au moins un élément rétractable tubulaire sur un réceptacle tel que câble ou analogues, à un emplacement de destination précis sur le réceptacle et à l'aide d'un dispositif de pose.

Ce dispositif comporte au moins: un tube rigide creux apte à être enfilé librement sur le réceptacle et sur l'extérieur duquel l'élément à poser est initialement monté tendu; et des moyens de glissement relatif à faible coefficient de frottement, provisoirement solidarisés par enserrement et interposés entre le tube et l'élément élastique.

Le procédé prévoit l'enfilement du dispositif sur le réceptacle de sorte que l'élément rétractable soit amené au droit de son emplacement de destination précis, puis d'évacuer le tube pour qu'au fur et à mesure de son retrait, l'élément rétractable vienne se conformer au réceptacle (voir EP-A-0 797 281).

Selon une caractéristique, la pose de l'élément rétractable est effectuée, en:
- maintenant l'élément rétractable à son emplacement de destination précis; et
- exerçant sur des moyens de traction, comportant un étui unitaire souple en matière synthétique sensiblement inextensible, étendu extérieurement sur au moins une partie du tube pour former une extrémité libre externe de réception de l'élément rétractable, et intérieurement depuis un ourlet de rebroussement jusqu'à proximité d'une extrémité arrière du tube, un effort de traction vers l'arrière qui, d'une part assure la pose de l'élément rétractable sur le réceptacle et d'autre part provoque l'évacuation simultanée du tube avec l'étui.

La pose est donc effectuée sensiblement sans effort par l'opérateur directement sur le tube.

Une caractéristique prévoit, notamment dans le cas d'un élément long, avec un dispositif comportant deux tubes et étuis bout-à-bout longitudinalement sensiblement en regard, que soit exercé, successivement ou simultanément, sur deux moyens de traction sensiblement opposés longitudinalement, respectivement un effort vers l'arrière, dans un sens inverse.

Selon une autre caractéristique, suite à la pose de l'élément rétractable, est prévue une étape d'enlèvement ou d'évacuation du tube évacué et/ou de l'étui retiré, par éloignement et/ou séparation de bandes ce dernier sur toute sa dimension longitudinale, le long d'au moins une fente apte à permettre une fois écartée, le passage au travers d'elle, du réceptacle avec l'élément rétractable posé.

Dans une réalisation, l'étape d'enlèvement du tube comporte au moins une phase d'éloignement relatif par exemple tangentiel, d'au moins deux bandes de tube longitudinales initialement distinctes, ayant préalablement fait partie de, ou constitué le tube, par juxtaposition et/ou assemblage, par exemple par agrafage élastique.

Une réalisation prévoit que l'étape d'enlèvement du tube comporte au moins une phase de séparation mutuelle par exemple radiale, d'au moins deux bords de bandes longitudinales unitaires, par exemple reliées par une zone de rupture préférentielle.

Dans une réalisation où les moyens d'enlèvement de l'étui comportent au moins deux bandes, l'étape de traction exercée sur l'étui est notamment effectuée par prise en main par un opérateur de bandes agencées en tresse préhensible.

Selon une caractéristique, suite à la pose de l'élément élastique, est prévue une étape de morcellement longitudinal du tube, en au moins deux tronçons ou anneaux de tube.

Dans une réalisation, l'étape de morcellement comporte au moins une phase de segmentation de tronçons de tube préalablement solidarisés, par exemple par agrafage élastique et/ou de tronçons préalablement unitaires par exemple via au moins une zone de rupture préférentielle.

Un deuxième objet de l'invention est un dispositif de pose d'au moins un élément rétractable tubulaire sur un réceptacle tel que câble ou analogues, à un emplacement de destination précis sur le réceptacle.

Ce dispositif comporte au moins:
- un tube rigide creux apte à être enfilé librement sur le réceptacle et sur l'extérieur duquel l'élément à poser est initialement monté tendu; et
- des moyens de glissement relatif à faible coefficient de frottement, provisoirement solidarisés par enserrement et interposés entre le tube et l'élément rétractable.

Ce dispositif permet l'enfilement sur le réceptacle de l'élément rétractable au droit de son emplacement de destination précis, puis l'évacuation du tube pour que l'élément rétractable vienne se conformer au réceptacle.

Selon une caractéristique, les moyens de glissement relatif comprennent un étui unitaire souple en matière synthétique sensiblement inextensible, étendu extérieurement sur au moins une partie du tube pour former une extrémité libre externe arrière de réception de l'élément rétractable, et étendu intérieurement depuis un ourlet de rebroussement jusqu'au delà d'une extrémité arrière du tube, directement ou par l'intermédiaire de lanières souples intérieures, pour former des moyens de traction sur l'étui.

Tandis que la paroi périphérique externe du tube est sensiblement dépourvue de moyens de préhension tels que saillie et/ou cavité débouchante.

Dans une réalisation, la paroi périphérique externe du tube est sensiblement lisse et dépourvue de discontinuité.

Selon une caractéristique, le tube présente une section sensiblement circulaire, transversalement à sa direction longitudinale, et par exemple cylindrique à génératrice sensiblement parallèle à cette direction longitudinale.

Selon une autre caractéristique, le tube présente une section, transversalement à sa direction longitudinale, sensiblement polygonale, par exemple dodécahédrique.

Selon encore une caractéristique, la paroi périphérique externe du tubé présente une génératrice inclinée, de l'intérieur vers l'extérieur radialement et d'avant en arrière dans un sens de traction de l'étui suivant la direction longitudinale, par rapport à celle-ci, d'un angle de l'ordre de 2° à 15°, et par exemple de l'ordre de 7° à 8°.

Cela participe à une extraction aisée.

Une caractéristique prévoit, notamment dans le cas d'un élément long, que le dispositif comporte deux tubes ainsi que deux étuis bout-à-bout longitudinalement en regard respectivement, et donc deux moyens de traction sensiblement opposés longitudinalement.

Selon une autre caractéristique, le tube et/ou l'étui comporte des moyens d'enlèvement après pose par séparation de et/ou éloignement en au moins deux bandes, respectivement du tube et/ou de l'étui.

Par exemple, le tube et/ou l'étui comporte de deux à douze bandes.

Dans une réalisation, les moyens d'enlèvement du tube comportent au moins deux bandes à éloigner, sensiblement longitudinales et initialement distinctes, par exemple juxtaposées et/ou assemblées.

Par exemple, les moyens d'enlèvement du tube comportent au moins une fente de solidarisation par agrafage élastique de bandes à éloigner, sensiblement étendue sur toute une génératrice du tube, suivant la direction longitudinale.

Un autre réalisation prévoit que les moyens d'enlèvement du tube comportent au moins deux bandes à séparer, sensiblement longitudinales et préalablement unitaires.

Par exemple, les bandes sont reliées via une zone de rupture préférentielle, sensiblement étendue sur toute une génératrice du tube, suivant la direction longitudinale.

Selon une caractéristique, le tube comporte des moyens de morcellement longitudinal du tube, en au moins deux tronçons ou anneaux de tube.

Par exemple, le tube comporte de deux à dix tronçons ou anneaux de tube.

Dans une réalisation, les moyens de morcellement comportent un système de segmentation, par exemple de tronçons préalablement solidaires par agrafage élastique et/ou de tronçons préalablement unitaires par de rupture suivant une zone préférentielle.

Selon un mode de réalisation, l'étui est intérieurement prolongé vers l'arrière par au moins deux lanières souples, par exemple deux lanières sont fixées chacune à l'étui pour former deux anses de préhension, les points de fixation étant sensiblement répartis régulièrement sur la périphérie interne de l'extrémité arrière de l'étui.

Un troisième objet de l'invention est un assemblage obtenu en mettant en oeuvre le procédé et/ou comportant au moins un dispositif tels qu'évoqués ci-dessus.

Des exemples de réalisation de l'invention sont exposées dans la description détaillée qui suit, et se réfère aux dessins annexés.

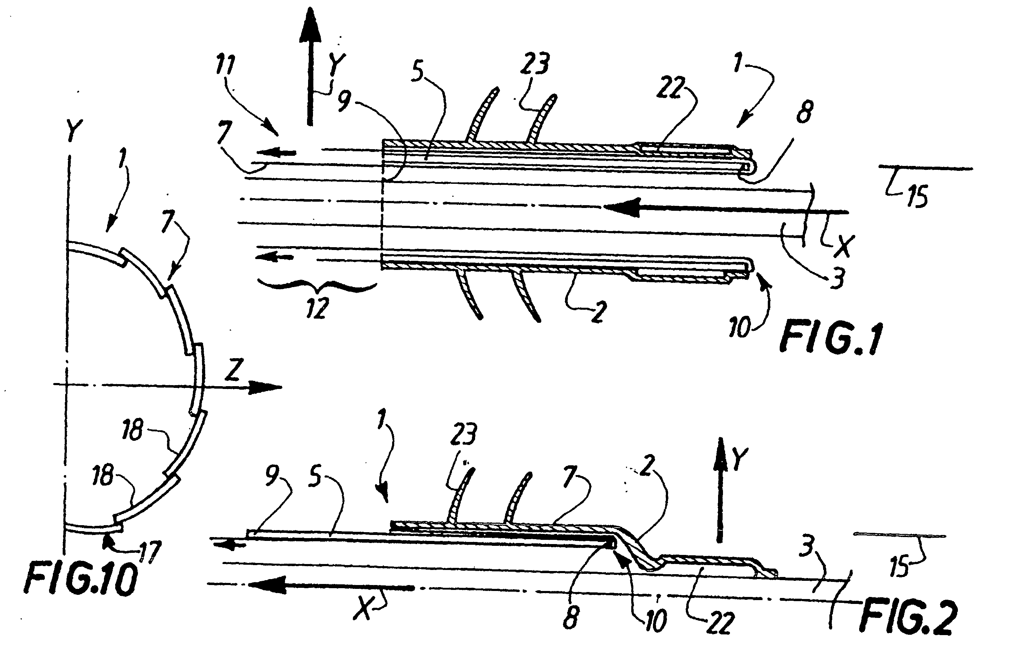

Dans ces dessins, la figure 1 est une vue schématique partielle en section longitudinale transversalement, illustrant une étape d'enfilement d'un procédé de pose selon l'invention.

La figure 2 est une demi-vue schématique partielle en section longitudinale transversalement, illustrant une étape ultérieure de maintien et de traction, du procédé de pose.

La figure 3 est une vue schématique partielle en section longitudinale transversalement, d'un exemple d'élément rétractable mis en place sur un câble électrique, selon l'invention.

La figure 4 est une vue schématique partielle en section longitudinale transversalement, d'un autre exemple selon l'invention, de dispositif comportant à son extrémité avant, un capot d'embout profilé, à tronçon conique de positionnement.

Les figures 5, 6 et 8 sont des vues schématiques partielles en perspective d'élévation longitudinale arrières, d'exemples de tubes selon l'invention.

La figure 7 est une vue schématique partielle agrandie du détail VII de la figure 6, qui illustre une réalisation de moyens de morcellement à agrafage élastique, selon l'invention.

La figure 9 est une vue schématique partielle en section d'élévation longitudinale, d'un dispositif à deux tubes et deux étuis bout-à-bout, avant la pose.

La figure 10 est une demie-vue schématique en section transversale d'un étui de dispositif à bandes multiples longitudinalement séparables et agençables en tresse.

La figure 11 est une vue du dispositif de pose d'élément rétractable de la figure 4, en section longitudinale transversalement.

La figure 12 est une vue du dispositif de pose de la figure 11, sans élément rétractable, en perspective arrière longitudinale et transversale.

Sur les figures, sont représentées des directions mutuellement orthogonales X, Y et Z.

La direction X dite longitudinale, et la direction Y dite transversale, sont considérées sensiblement horizontales. Tandis que la direction Z dite d'élévation est considérée sensiblement verticale.

L'invention est décrite ici en se reportant à ces directions X, Y et Z.

Pour les pièces de rotation, le terme radial désigne toute direction sensiblement dans un plan perpendiculaire à la direction longitudinale X, telles que les directions transversale Y et d'élévation Z.

Les constituants de l'invention sont décrits dans leurs positions et orientations courantes d'utilisation. Mais il va de soi qu'ils peuvent prendre diverses positions ou orientations.

Tel est le cas notamment pour les constituants déplaçables ou déformables. De même, les positions et orientations de stockage des constituants de l'invention peuvent être différentes.

Ces positions et orientations sont donc indiquées uniquement à titre explicatif.

Il est précisé ici que les termes "avant" et "arrière" sont considérés respectivement comme indiquant un emplacement amont et aval selon un sens de pose défini, suivant la direction longitudinale X, et indiqué sur les figures par la flèche correspondante.

Et que les termes "élévation", "longitudinalement" et "transversalement" se rapportent aux directions correspondantes.

Sur les figures, la référence numérique 1 désigne un dispositif de pose d'un élément rétractable 2 tubulaire, sur un réceptacle 3 tel que câble ou analogues.

Cette pose doit être, pour les raisons évoquées plus haut, effectuée à un emplacement de destination précis sur le réceptacle 3.

Dans des réalisations non illustrées, un seul dispositif 1 sert à la pose de plusieurs éléments rétractables 2, en série les un à la suite des autres sur un réceptacle 3 commun.

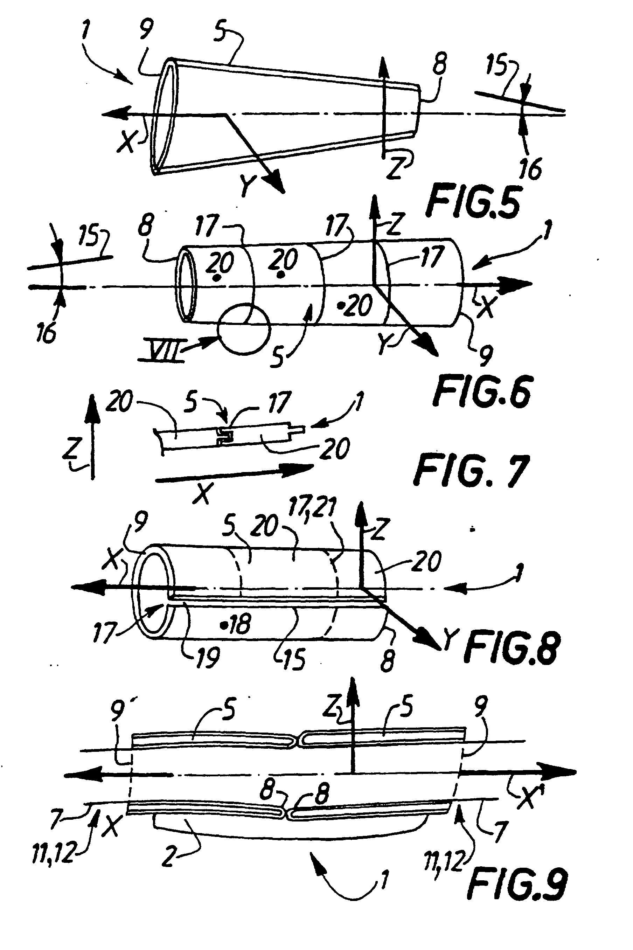

A l'inverse, comme expliqué plus loin en rapport avec la figure 9, un élément rétractable 2 unique, en particulier de dimension importante suivant la direction longitudinale X, est posé avec un dispositif 1 dit double.

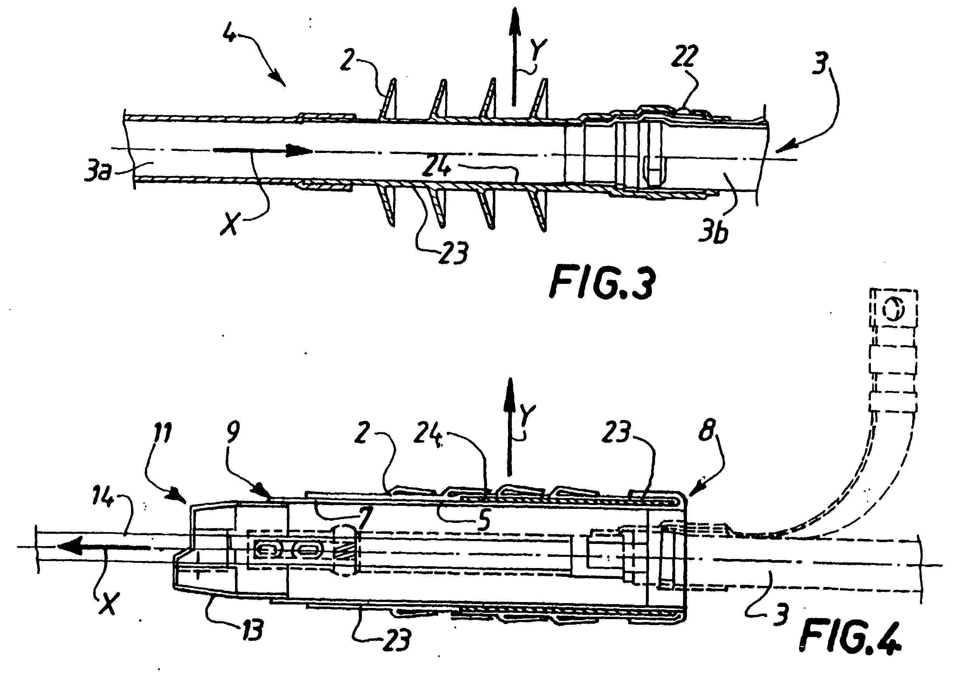

Une fois la pose effectuée, l'élément rétractable 2 et le câble 3 forment un assemblage désigné en 4, tel que celui que l'on voit sur la figure 3.

Sur cette figure 3 précisément, l'assemblage 4 comporte un branchement de deux parties 3a et 3b d'un câble électrique 3 pour haute tension (HTA).

Sur un tel câble 3, il est impératif de rajouter (aux extrémités des deux parties 3a et 3b branchées l'une à l'autre bout-à-bout), un élément 2 formant accessoire de répartition des champs électriques et d'isolation.

La figure 4 illustre un autre exemple, où le réceptacle 3 est un câble électrique pour haute-tension (HTA), à une extrémité libre duquel est posé, à l'aide du dispositif 1, une gaine élastique de protection et d'isolation, qui forme l'élément 2.

Evidemment, de nombreux autres types d'éléments 2 rétractables ou élastiques, similaires dans leur structure, mais de destination ou fonction différente, sont concernés par l'invention.

Ainsi, des éléments 2 tels que câble optique, cordon mécanique, tresse conductrice électronique ou autre organe tubulaire rétractable analogue, peut être posé à l'aide d'un dispositif 1.

Dans ce but, un tel dispositif 1 comporte de manière générale, au moins:
- un tube 5 rigide creux apte à être enfilé librement sur le réceptacle 3 et sur l'extérieur duquel l'élément 2 à poser est initialement monté tendu; et
- des moyens 6 de glissement relatif à faible coefficient de frottement, provisoirement solidarisés par enserrement et interposés entre le tube 5 et l'élément rétractable 2.

Notons ici que suivant l'invention, les moyens 6 de glissement sont juste provisoirement intercalés entre l'extérieur du tube 5 et l'intérieur de l'élément 2, sans collage, soudage, agrafage ou autre solidarisation permanente.

Ces moyens de glissement 6 sont ainsi, dans l'attente de la pose, provisoirement maintenus sur le tube 5 avec l'élément rétractable 2, uniquement par la tension de ce dernier sur le tube 5.

Dans les réalisations illustrées, les moyens 6 comportent un film anti-adhérent en matière synthétique, par exemple avec du polyvinyle, polyéthylène, polyester ou analogues.

Dans ces réalisations, le film est sec, mais des mises en oeuvre de l'invention prévoient l'enduction, au moins locale, avec une matière grasse telle que silicone ou analogues.

Dans une réalisation non illustrée, le film des moyens de glissement 6 est multicouche. Tandis que sur les figures 1 à 4 et 9, les moyens de glissement 6 sont constitués par un film plastique à couche unique.

Déjà, on comprend que ce dispositif 1 permet l'enfilement de l'élément 2 sur le réceptacle 3, au droit de son emplacement de destination précis, puis l'évacuation du tube 5 pour que cet élément 2 vienne se conformer en se rétractant au réceptacle 3.

Par glissement relatif des moyens 6, on entend que ces moyens favorisent le déplacement de l'élément 2 par rapport au tube 5, lors de la pose.

La tension de l'élément 2, associée à la qualité de surface des moyens 6, permet à ces derniers de ne pas glisser par rapport à l'élément 2, tant qu'une traction de pose n'est pas exercée dessus.

Ici, les moyens de glissement 6 comprennent un étui unitaire 7 souple mais sensiblement inextensible.

Cet étui 7 est, sur les figures, en matière synthétique.

A l'exception de l'exemple de la figure 4, les réalisations illustrées de l'invention prévoient en fait que les moyens de glissement 6 comportent essentiellement, voire sont formés par, cet étui unitaire 7.

Cet étui 7 est étendu extérieurement sur au moins une partie du tube 5 pour former une extrémité libre externe arrière de réception de l'élément 2 rétractable.

Sur les figures 1 à 4 et 9, l'étui 7 est étendu extérieurement sur une partie du tube 5 longitudinalement comprise entre un embout avant 8 du tube et au moins un embout 9 opposé dit arrière.

Sur la figure 1 par exemple, l'embout avant 8 est à droite, tandis que l'embout 9 est à gauche. On comprend que le sens X sur les figures, va de l'embout avant 8 vers l'embout arrière 9.

Au droit de l'embout avant 8, le film de l'étui 7 forme un rebroussement. Plus précisément, l'embout 8 est entouré par un ourlet 10, c'est-à-dire un coude pour revenir vers l'arrière.

Notons ici qu'il est évité, autant que faire ce peut, de donner à l'embout avant 8 une forme anguleuse, qui pourrait freiner ou accrocher le film de l'étui 7, lors de la pose.

A l'intérieur, l'étui 7 est étendu depuis un ourlet de rebroussement jusqu'à proximité d'une extrémité arrière de l'embout 9, pour former des moyens 11 de traction sur l'étui 7.

Sur les figures 1 et 2, l'étui 7 est étendu intérieurement suivant la direction longitudinale X, jusqu'au delà de l'extrémité arrière du tube 5. En fait, l'étui 7 saille vers l'arrière du tube 5.

C'est directement une partie saillante 12 arrière de cet étui 7, qui fait ici office alors de moyens de traction 11.

A cette fin, cette partie saillante 12 peut est conformée, par exemple en tresse, pour améliorer sa tenue en main.

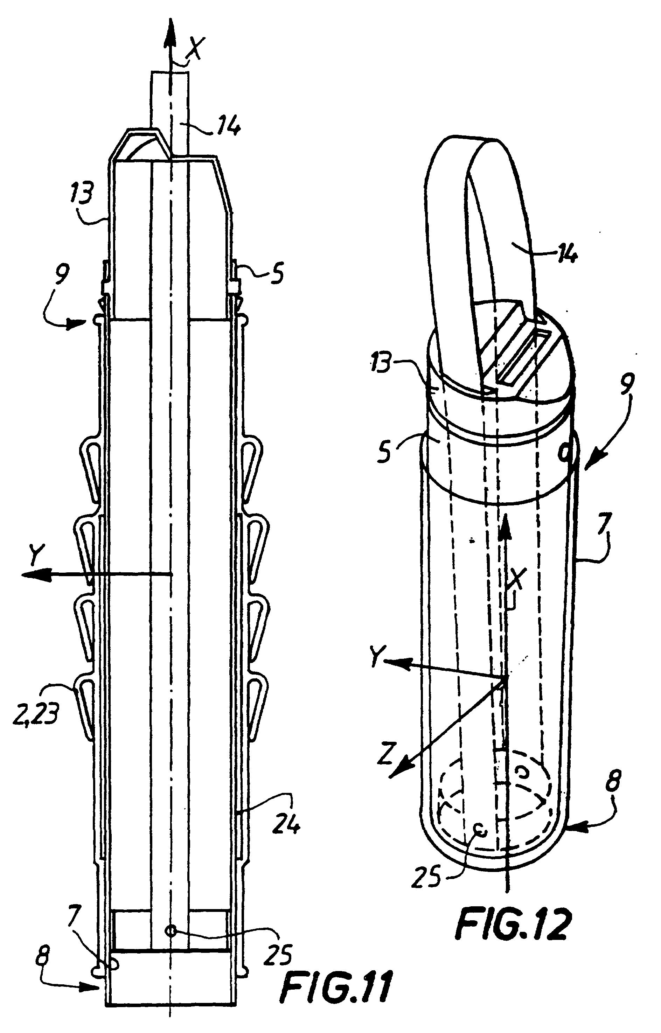

Tel est le cas sur la figure 10, où l'étui 7 est constitué de bandes longitudinales, mutuellement en recouvrement suivant la périphérie de l'étui 7.

Par contre, sur la figure 4 l'étui 7 est étendu sensiblement jusqu'au droit de cette extrémité, et le tube 5 est prolongé par un capot 13 à l'embout arrière.

Ce capot 13 permet de positionner l'ensemble formé par le reste du dispositif 1, par rapport au câble 3 de réception.

Bien que cela ne ressorte pas de la figure 4, le capot 13 est réalisé en matière translucide en transparence.

Dans une réalisation non représentée, le tube 5 et le capot 13 sont unitaires, par exemple obtenus par moulage injection. Alors, l'embout arrière 9 est localisé à l'emplacement sur la figure 4, de la paroi arrière perpendiculairement à la direction X de ce capot 13.

Un tel positionnement est particulièrement appréciable dans le cas d'une extrémité de câble 3 de type HTA, puisque la pose est en général une opération de chantier.

Toujours sur la figure 4, outre l'étui 7, les moyens de traction 11 présentent des lanières préhensibles 14 qui sont rendues rigidement solidaires de cet étui 7, notamment suivant la direction longitudinale X. Chaque lanière 14 traverse une lumière formée dans le capot 13.

On remarque également sur les figures 11 et 12 que l'étui 7 proprement dit est rendu rigidement solidaire des extrémités de la lanière 14, respectivement par un point de fixation 25, tel que point de collage ou soudage.

Il ressort des figure que la paroi périphérique externe du tube 5 est sensiblement dépourvue de moyens de préhension tels que saillie et/ou cavité débouchante, entre ses embouts 8 et 9.

Dans les réalisations illustrées, cette paroi est sensiblement lisse et dépourvue de discontinuités.

Sur la figure 1, 2, 8 ou 9, le tube 5 présente une section sensiblement circulaire, transversalement à la direction longitudinale X, et cylindrique à génératrice 15 sensiblement parallèle à cette direction longitudinale X.

Selon une autre réalisation non illustrée, le tube 5 présente une section, transversalement à sa direction longitudinale X, sensiblement polygonale, par exemple dodécahédrique.

Par contre, sur les figures 5 et 6, la paroi périphérique externe du tube 5 présente une génératrice 15 inclinée, de l'intérieur vers l'extérieur radialement et d'avant en arrière dans un sens de traction X de l'étui 7 suivant la direction longitudinale.

Par rapport à cette direction X, la génératrice 15 forme un angle 16 de l'ordre de 2° à 15°.

Sur la figure 5, l'angle 16 est de l'ordre de 12°. Sur la figure 6, cet angle 16 est de l'ordre de 7°.

Cela participe à une extraction aisée du tube 5 sous l'effet des moyens 11, comme cela est exposé plus loin.

La réalisation de la figure 9 prévoit que le dispositif 1 comporte deux tubes 5 ainsi que deux étuis 7 bout-à-bout longitudinalement en regard respectivement. Donc, deux moyens de traction 11 sensiblement opposés longitudinalement sont ici prévus.

Un tel agencement est pratique par exemple dans le cas d'un élément 2, de dimension importante suivant la direction longitudinale X.

Sur les figures 6 à 8, le tube 5 comporte des moyens d'enlèvement 17 après pose. Ces moyens 17 fonctionnent par séparation de et/ou éloignement en au moins deux bandes 18 du tube 5.

Sur la figure 10, il en va de même avec l'étui 7.

Par exemple, le tube 5 -ou l'étui 7- comporte de deux à douze bandes 18.

Sur la figure 10, les moyens d'enlèvement 17 de l'étui 7 comportent douze bandes 18 à éloigner, sensiblement longitudinales et initialement distinctes, dans cet exemple juxtaposées.

Dans des réalisations, les bandes 18 sont assemblées, notamment lorsqu'elles sont perpendiculaires à la direction longitudinales X, et donc sollicitées dans le sens de leur séparation, lors de la pose.

Sur la figure 8, les moyens d'enlèvement 17 du tube 5 comportent une fente 19 unique de solidarisation par agrafage élastique d'une bande 18 unique dont les bords sont à éloigner.

La fente 19 est ici étendue sur toute la génératrice 15 du tube 5, suivant la direction longitudinale X.

Un autre réalisation prévoit que les moyens d'enlèvement 17 du tube 5 comportent au moins deux bandes 18 à séparer, sensiblement longitudinales et préalablement unitaires.

Dans cet exemple, les bandes 18 sont reliées via une zone de rupture préférentielle, sensiblement étendue sur toute une génératrice 15 du tube 5, suivant la direction longitudinale X.

Selon une caractéristique, le tube 5 comporte des moyens de morcellement longitudinal du tube 5, en au moins deux tronçons 20 ou anneaux de tube 5.

Du fait de leurs fonctions similaires, les moyens de morcellement son désignés ici par la même référence numérique 17, que les moyens d'enlèvement.

Par exemple, le tube 5 comporte de deux à dix tronçons 20 de tube 5.

Dans la réalisation des figures 6 et 7, les moyens 17 de morcellement comportent un système de segmentation de tronçons 20 préalablement solidaires, par agrafage élastique.

Des moyens 17 de morcellement représentés sur la figure 8 comportent un système de segmentation de deux tronçons longitudinaux 20, préalablement unitaires, par rupture du tube 5 suivant une zone préférentielle 21 périphérique.

Décrivons maintenant le procédé de pose d'un élément 2 rétractable tubulaire sur un réceptacle 3 à l'aide d'un dispositif 1 de pose.

Cet élément 2 à poser est initialement monté tendu sur le tube 5, et les moyens de glissement relatif 6, à faible coefficient de frottement, provisoirement solidarisés par enserrement et interposés entre le tube 5 et l'élément 2 élastique.

Le montage sur le tube 5 de l'élément 2 est typiquement effectué en usine.

Le procédé prévoit ensuite l'enfilement du dispositif 1 sur le réceptacle 3 de sorte que l'élément 2 rétractable soit amené au droit de son emplacement de destination précis.

Puis il convient d'évacuer le tube 5 pour qu'au fur et à mesure de son retrait, l'élément 2 rétractable vienne se conformer au réceptacle 3.

Pour ce faire, l'opérateur de pose de l'élément 2:
- maintient par exemple dune main l'élément 2 rétractable à son emplacement de destination précis; et
- exerce par exemple de l'autre main, sur les moyens de traction 11, notamment l'étui 7 unitaire souple, un effort de traction vers l'arrière.

Sur les figures, cet effort est illustré par les flèches X.

Dune part cet effort X assure la pose de l'élément 2 rétractable sur le réceptacle 3.

D'autre part, il provoque l'évacuation simultanée du tube 5 avec l'étui 7.

La pose est donc effectuée sensiblement sans effort par l'opérateur directement sur le tube 5.

Il est ainsi permis que l'étui 7 ne reste pas en partie sous l'élément 2 une fois le tube 5 extrait, ce qui évite de piéger des bulles d'air ou d'abîmer des constituants de cet élément 2, tels que les bagues de mastic 22 visibles sur les figures 1 et 2. Il s'agit d'une bague 22 de mastic d'étanchéité.

Sur ces figures, la bague 22 est disposée entre l'extérieur de l'étui 7 et une gaine en chaussette en matière synthétique élastique 23 de l'élément 2.

Sur les figures 3 et 4, est prévu à l'avant une bague 22 de mastic d'étanchéité, et vers l'arrière une couche tubulaire 24 de mastic de répartition de champs.

La figure 9 montre une pose avec un dispositif 1 comportant deux tubes 5 et étuis 7 bout-à-bout.

Cette pose prévoit que soit exercé, successivement (par exemple par un opérateur unique) ou simultanément (par exemple par deux opérateurs), sur deux moyens de traction 11 sensiblement opposés longitudinalement, respectivement un effort X et X'.

Chaque effort X ou X' est ici dirigé vers l'arrière du tube 5 correspondant, dans un sens inverse.

Suite à la pose de l'élément 2, est prévue avec les tubes 5 des figures 5 à 8 une étape d'enlèvement ou d'évacuation de ce tube 5 évacué et/ou de l'étui 7 retiré.

Cette phase est effectuée, selon les cas, par éloignement ou séparation de bandes 18 ce dernier sur toute sa dimension longitudinale X, le long d'au moins une fente 19 apte à permettre une fois écartée, le passage au travers d'elle, du réceptacle 3 avec l'élément 2 rétractable posé.

Dans une réalisation, l'étape d'enlèvement du tube 5 comporte au moins une phase d'éloignement relatif par exemple tangentiel, d'au moins deux bandes 18 de tube 5 longitudinales initialement distinctes, ayant préalablement fait partie de, ou constitué le tube 5, par juxtaposition et/ou assemblage, par exemple par agrafage élastique.

La réalisation de la figure 8 prévoit que l'étape d'enlèvement du tube 5 comporte une phase de séparation mutuelle par exemple radiale, d'au moins deux bords de bandes 18 longitudinales unitaires.

De telles bandes peuvent par exemple être reliées par une zone de rupture préférentielle 21.

Mais ici elles le sont par agrafage élastique.

Dans la réalisation de la figure 10 où les moyens d'enlèvement de l'étui 7 comportent au moins deux bandes 18, et l'étape de traction exercée sur l'étui 7 est notamment effectuée par prise en main par un opérateur de ces bandes 18 agencées en tresse préhensible.

Avec le tube de la figure 6 ou 7, suite à la pose de l'élément 2 élastique, est prévue une étape de morcellement longitudinal du tube 5, en plusieurs tronçons 20.

Selon les réalisations, l'étape de morcellement comporte au moins une phase de segmentation des tronçons 20 de tube 5 préalablement solidarisés, par exemple par agrafage élastique.

Il en va de même pour les tronçons 20 préalablement unitaires par exemple via au moins une zone de rupture préférentielle 21, comme sur la figure 8.

Evidemment, l'invention vise aussi l'assemblage 4 obtenu en mettant en oeuvre le procédé qui vient d'être exposé et/ou au moins un dispositif 1.

Dans des réalisations non représentées:
- le tube 5 est constitué de plusieurs morceaux, si l'accès est limité devant l'extrémité;
- le tube est fendu pour extraire celui-ci, s'il y a câble passant; ou
- l'extrémité de l'étui 7 peut être fixée à une butée contre laquelle vient s'appuyer le bout de la gaine 23.

## Revendications

1. Procédé de pose d'au moins un élément (2) rétractable tubulaire sur un réceptacle (3) tel que câble ou analogues, à un emplacement de destination précis et à l'aide d'un dispositif (1) de pose qui comporte au moins un tube (5) rigide creux sur l'extérieur duquel l'élément (2) à poser est initialement monté tendu, et des moyens (6) de glissement relatif à faible coefficient de frottement entre le tube (5) et l'élément (2) élastique; le procédé prévoit l'enfilement du dispositif (1) sur le réceptacle (3) de sorte que l'élément (2) soit amené au droit de son emplacement de destination, puis l'évacuation du tube (5) pour qu'au fur et à mesure de son retrait, l'élément (2) vienne se conformer au réceptacle (3); **caractérisé en ce que** la pose de l'élément (2) est effectuée, en maintenant cet élément (2) à son emplacement de destination; et exerçant sur des moyens de traction (11), comportant essentiellement un étui (7) unitaire souple en matière synthétique sensiblement inextensible, étendu extérieurement sur au moins une partie du tube (5) pour former une extrémité libre externe de réception de l'élément (2), et intérieurement depuis un ourlet (10) de rebroussement jusqu'à proximité d'une extrémité ou embout (9) arrière du tube (5) directement ou par l'intermédiaire de lanières (14) souples intérieures, un effort (X, X') de traction vers l'arrière qui, d'une part assure la pose de l'élément (2) sur le réceptacle (3) et d'autre part provoque l'évacuation simultanée du tube (5) avec l'étui (7).

2. Procédé selon la revendication 1, **caractérisé en ce que**, notamment dans le cas d'un élément (2) long, avec un dispositif (1) comportant deux tubes (5) et étuis (7) bout-à-bout longitudinalement sensiblement en regard, soit exercé, successivement ou simultanément, sur deux moyens de traction (11) sensiblement opposés longitudinalement, respectivement un effort (X, X') vers l'arrière, dans un sens inverse.

3. Procédé selon la revendication 1 ou 2, **caractérisé en ce que**, suite à la pose de l'élément (2) rétractable, est prévue une étape d'enlèvement ou d'évacuation du tube (5) évacué et/ou de l'étui (7) retiré, par éloignement et/ou séparation de bandes (18) ce dernier sur toute sa dimension longitudinale (X), le long d'au moins une fente (19) apte à permettre une fois écartée, le passage au travers d'elle, du réceptacle (3) avec l'élément (2) posé.

4. Procédé selon la revendication 3, **caractérisé en ce que** l'étape d'enlèvement du tube (5) comporte au moins une phase d'éloignement relatif par exemple tangentiel, d'au moins deux bandes (18) de tube (5) longitudinales initialement distinctes, ayant préalablement fait partie de, ou constitué le tube (5), par juxtaposition et/ou assemblage, par exemple par agrafage élastique.

5. Procédé selon la revendication 3 ou 4, **caractérisé en ce que** l'étape d'enlèvement du tube (5) comporte au moins une phase de séparation mutuelle par exemple radiale, d'au moins deux bords de bandes (18) longitudinales unitaires, par exemple reliées par une zone (21) de rupture préférentielle.

6. Procédé selon l'une des revendications 3 à 5, **caractérisé en ce que** les moyens d'enlèvement de l'étui (7) comportant au moins deux bandes (18), l'étape de traction exercée sur l'étui (7) est notamment effectuée par prise en main par un opérateur de bandes (18) agencées en tresse préhensible.

7. Procédé selon Tune des revendications 1 à 6, **caractérisé en ce que**, suite à la pose de l'élément (2) élastique, est prévue une étape de morcellement longitudinal du tube (5), en au moins deux tronçons (20) ou anneaux de tube (5).

8. Procédé selon la revendication 7, **caractérisé en ce que** l'étape de morcellement comporte au moins une phase de segmentation de tronçons (20) de tube (5) préalablement solidarisés, par exemple par agrafage élastique et/ou de tronçons préalablement unitaires par exemple via au moins une zone (21) de rupture préférentielle.

9. Dispositif (1) de pose d'au moins un élément (2) rétractable tubulaire sur un réceptacle (3) tel que câble ou analogues, à un emplacement de destination précis sur le réceptacle (3), ce dispositif (1) comportant au moins:
- un tube (5) rigide creux apte à être enfilé librement sur le réceptacle (3) et sur l'extérieur duquel l'élément (2) à poser est initialement monté tendu; et
- des moyens de glissement (6) relatif à faible coefficient de frottement, provisoirement solidarisés par enserrement et interposés entre le tube (5) et l'élément (2); ce dispositif (1) permettant l'enfilement sur le réceptacle (3) de l'élément (2) au droit de son emplacement de destination, puis l'évacuation du tube (5) pour que l'élément (2) vienne se conformer au réceptacle (3) ; **caractérisé en ce que** les moyens de glissement (6) relatif comprennent un étui (7) unitaire souple en matière synthétique sensiblement inextensible, étendu extérieurement sur un moins une partie du tube (5) pour former une extrémité libre externe de réception de l'élément (2), et étendu intérieurement depuis un ourlet (10) de rebroussement jusqu'à proximité d'une extrémité ou embout (9) arrière du tube (5)directement ou par l'intermédiaire de lanières (14) souples intérieures, pour former des moyens de traction (11) sur l'étui 7, tandis que la paroi périphérique externe du tube (5) est sensiblement dépourvue de moyens de préhension tels que saillie et/ou cavité débouchante.

10. Dispositif (1) selon la revendication 9, **caractérisé en ce que** la paroi périphérique externe du tube (5) est sensiblement lisse et dépourvue de discontinuité,

11. Dispositif (1) selon la revendication 9 ou 10, **caractérisé en ce que** le tube (5) présente une section sensiblement circulaire, transversalement à sa direction longitudinale (X), et par exemple cylindrique à génératrice (15) sensiblement parallèle à cette direction (X).

12. Dispositif (1) selon la revendication 9 ou 10, **caractérisé en ce que** le tube (5) présente une section, transversalement à sa direction longitudinale (X), sensiblement polygonale, par exemple dodécahédrique.

13. Dispositif (1) selon l'une des revendications 9 à 12, **caractérisé en ce que** la paroi périphérique externe du tube (5) présente une génératrice (15) inclinée, de l'intérieur vers l'extérieur radialement et d'avant en arrière dans un sens (X) de traction de l'étui (7) suivant la direction longitudinale, par rapport à celle-ci, d'un angle (16) de l'ordre de 2° à 15°, et par exemple de l'ordre de 7° à 8°.

14. Dispositif (1) selon Tune des revendications 9 à 13, **caractérisé en ce que** , notamment dans le cas d'un élément (2) long, le dispositif (1) comporte deux tubes (5) ainsi que deux étuis (7) bout-à-bout longitudinalement en regard respectivement, et donc deux moyens (11) de traction sensiblement opposés longitudinalement.

15. Dispositif (1) selon l'une des revendications 9 à 12, **caractérisé en ce que** le tube (5) et/ou l'étui (7) comporte des moyens d'enlèvement (17) après pose par séparation de et/ou éloignement en au moins deux bandes (18), respectivement du tube (5) et/ou de l'étui (7), par exemple, le tube (5) et/ou l'étui (7) comporte de deux à douze bandes (18).

16. Dispositif (1) selon la revendication 15, **caractérisé en ce que** les moyens d'enlèvement (17) du tube (5) comportent au moins deux bandes (18) à éloigner, sensiblement longitudinales et initialement distinctes, par exemple juxtaposées et/ou assemblées, par exemple les moyens d'enlèvement (17) du tube (5) comportent au moins une fente (19) de solidarisation par agrafage élastique de bandes (18) à éloigner, sensiblement étendue sur toute une génératrice (15) du tube (5), suivant la direction longitudinale (X).

17. Dispositif (1) selon la revendication 15 ou 16, **caractérisé en ce que** les moyens d'enlèvement (17) du tube (5) comportent au moins deux bandes (18) à séparer, sensiblement longitudinales et préalablement unitaires, par exemple, les bandes (18) sont reliées via une zone (21) de rupture préférentielle, sensiblement étendue sur toute une génératrice (15) du tube (5), suivant la direction longitudinale (X).

18. Dispositif (1) selon l'une des revendications 9 à 17, **caractérisé en ce que** le tube (5) comporte des moyens de morcellement (17) longitudinal du tube (5), en au moins deux tronçons (20) ou anneaux de tube (5), par exemple, le tube (5) comporte de deux à dix tronçons (20).

19. Dispositif (1) selon la revendication 18, **caractérisé en ce que** les moyens de morcellement (17) comportent un système de segmentation, par exemple de tronçons (20) préalablement solidaires par agrafage élastique et/ou de tronçons préalablement unitaires par rupture suivant une zone (21) préférentielle.

20. Dispositif (1) selon l'une des revendications 1 à 19 **caractérisé en ce que** l'étui (7) est intérieurement prolongé vers l'arrière par au moins deux lanières souples (14), par exemple deux lanières (14) sont fixées chacune à l'étui (7) pour former deux anses de préhension, les points de fixation (25) étant sensiblement répartis régulièrement sur la périphérie interne de l'extrémité arrière de l'étui (7).

21. Assemblage (4) obtenu en mettant en oeuvre le procédé selon l'une des revendications 1 à 9 et/ou comportant au moins un dispositif (1) selon Tune des revendications 10 à 20.

## Patentansprüche

1. Verfahren zum Anbringen mindestens eines rohrförmigen schrumpfbaren Elements (2) auf einem Träger (3) wie beispielsweise ein Kabel oder dergleichen, an einer präzisen Stelle und anhand einer Anbringungsvorrichtung (1), die mindestens ein starres hohles Rohr (5) umfasst, an dessen Außenseite das zu anzubringende Element (2) ursprünglich gespannt montiert ist, und Mittel (6) zum relativen Verschieben mit kleinem Reibungskoeffizienten zwischen dem Rohr (5) und dem elastischen Element (2); wobei das Verfahren das Auffädeln der Vorrichtung (1) auf den Träger (3) vorsieht, so dass das Element (2) zu seinem bestimmungsgemäßen Sitz geführt wird, dann die Entfernung des Rohrs (5), damit sich das Element (2) fortschreitend mit seinem Rückzug an den Träger (3) anpasst; **dadurch gekennzeichnet, dass** die Anbringung des Elements (2) erfolgt, indem dieses Element (2) an seinem bestimmungsgemäßen Sitz festgehalten wird; und indem auf Zugmittel (11), die im wesentlichen ein flexibles einteiliges Etui (7) aus synthetischem, leicht streckbarem Stoff umfassen, das sich von außen über mindestens einen Teil des Rohr (5) erstreckt, um ein freies äußeres Aufnahmeende für das Element (2) zu bilden, und das sich von innen ab einem Umkehrsaum (10) bis in die Nähe eines hinteren Endes oder Ansatzes (9) des Rohrs (5) direkt oder über interne flexible Riemen (14) erstreckt, eine Zugkraft (X, X') nach hinten ausgeübt wird, die einerseits das Anbringen des Elements (2) auf dem Träger (3) gewährleistet und andererseits das gleichzeitige Evakuieren des Rohrs (5) mit dem Etui (7) bewirkt.

2. Verfahren nach Anspruch 1, **dadurch gekennzeichnet, dass** insbesondere im Fall eines langen Elements (2), mit einer zwei Rohre (5) und Etuis (7), die in Längsrichtung etwa gegenüberliegend aneinandergesetzt sind, umfassenden Vorrichtung (1) nacheinander oder gleichzeitig auf zwei in Längsrichtung etwa voneinander abgewandten Zugmitteln (11) jeweils eine Kraft (X, X') nach hinten in eine umgekehrte Richtung ausgeübt wird.

3. Verfahren nach Anspruch 1 oder 2, **dadurch gekennzeichnet, dass** nach dem Anbringen des schrumpfbaren Elements (2) eine Entfernungs- oder Evakuierungsetappe des evakuierten Rohrs (5) und/oder des herausgezogenen Etuis (7) durch Entfernung und/oder Trennung von Bändern (18) des letzteren über sein gesamtes Längsmaß (X) entlang mindestens eines Schlitzes (19), der nach seinem Aufspreizen die Passage des Trägers (3) mit dem angebrachten Element (2) ermöglicht, vorgesehen ist.

4. Verfahren nach Anspruch 3, **dadurch gekennzeichnet, dass** die Entfernungsetappe des Rohrs (5) mindestens eine relative, beispielsweise tangentiale Entfernungsphase mindestens zweier in Längsrichtung verlaufender, ursprünglich getrennter Bänder (18) des Rohrs (5) umfasst, die zuvor Bestandteil des Rohrs (5) waren oder es bildeten, durch Nebeneinanderlegen und/oder Zusammensetzen, beispielsweise durch elastisches Verklammern.

5. Verfahren nach Anspruch 3 oder 4, **dadurch gekennzeichnet, dass** die Entfernungsetappe des Rohrs (5) eine gegenseitige, beispielsweise radiale Trennungsphase mindestens zweier Ränder von in Längsrichtung verlaufenden Einzelbändern (18), die beispielsweise über einen bevorzugten Bruchbereich (21) verbunden sind, umfasst.

6. Verfahren nach einem der Ansprüche 3 bis 5, **dadurch gekennzeichnet, dass** die Entfernungsmittel des Etuis (7) mindestens zwei Bänder (18) umfassen, wobei die auf das Etui (7) ausgeübte Zugetappe insbesondere dadurch erfolgt, dass die als greifbares Geflecht ausgebildeten Bänder (18) von einem Bediener ergriffen werden.

7. Verfahren nach einem der Ansprüche 1 bis 6, **dadurch gekennzeichnet, dass** nach dem Anbringen des elastischen Elements (2) eine Zerstückelungsetappe in Längsrichtung des Rohrs (5) in mindestens zwei Abschnitte (20) oder Rohrringe (5) vorgesehen ist.

8. Verfahren nach Anspruch 7, **dadurch gekennzeichnet, dass** die Zerstückelungsetappe mindestens eine Segmentierungsetappe von Abschnitten (20) des Rohrs (5) umfasst, die zuvor beispielsweise elastisch miteinander verklammert warm, und/oder von Abschnitten, die zuvor beispielsweise über mindestens einen bevorzugten Bruchbereich (21) miteinander verbunden waren.

9. Vorrichtung (1) zum Anbringen mindestens eines rohrförmigen schrumpfbaren Elements (2) auf einem Träger (3) wie beispielsweise ein Kabel oder dergleichen, an einer präzisen Stelle auf dem Träger (3), wobei diese Vorrichtung (1) mindestens umfasst:
- ein starres hohles Rohr (5), das frei auf den Träger (3) aufgefädelt werden kann und an dessen Außenseite das zu anzubringende Element (2) ursprünglich gespannt montiert ist; und
- Mittel (6) zum relativen Verschieben mit kleinem Reibungskoeffizienten, die provisorisch durch Einklemmen miteinander verbunden und zwischen dem Rohr (5) und dem elastischen Element (2) eingefügt sind; wobei die Vorrichtung (1) das Auffädeln des Elements (2) an seinem bestimmungsgemäßen Sitz auf den Träger (3) ermöglicht, dann die Entfernung des Rohrs (5), damit sich das Element (2) an den Träger (3) anpasst; **dadurch gekennzeichnet, dass** die Mittel (6) zum relativen Verschieben ein flexibles Einheitsetui (7) aus synthetischem, leicht streckbarem Stoff umfassen, das sich von außen über mindestens einen Teil des Rohr (5) erstreckt, um ein freies äußeres Aufnahmeende für das Element (2) zu bilden, und das sich von innen ab einem Umkehrsaum (10) bis in die Nähe eines hinteren Endes oder Ansatzes (9) des Rohrs (5) direkt oder über interne flexible Riemen (14) erstreckt, um Zugmittel (11) auf das Etui (7) zu bilden, während die externe Umfangswand des Rohrs (5) im wesentlichen keine Ergreifungsmittel wie Vorsprünge und/oder Lochhohlräume aufweist.

10. Vorrichtung (1) nach Anspruch 9, **dadurch gekennzeichnet, dass** die externe Umfangswand des Rohrs (5) etwa glatt ist und keine Unterbrechung aufweist.

11. Vorrichtung (1) nach Anspruch 9 oder 10, **dadurch gekennzeichnet, dass** das Rohr (5) einen etwa kreisförmigen Abschnitt aufweist, quer zu seiner Längsrichtung (X), und beispielsweise zylindrisch mit etwa parallel zu dieser Richtung (X) verlaufender Erzeugenden (15) ist.

12. Vorrichtung (1) nach Anspruch 9 oder 10, **dadurch gekennzeichnet, dass** das Rohr (5) quer zu seiner Längsrichtung (X) einen etwa polygonalen, beispielsweise zwölfflächigen Abschnitt aufweist.

13. Vorrichtung (1) nach einem der Ansprüche 9 bis 12, **dadurch gekennzeichnet, dass** die externe Umfangswand des Rohrs (5) eine von innen nach außen radial und von vorne nach hinten in eine Zugrichtung (X) des Etuis (7), in Längsrichtung in Bezug auf dieselbe um einen Winkel (16) von etwa 2° bis 15° und beispielsweise von etwa 7° bis 8° geneigte Erzeugende (15) aufweist.

14. Vorrichtung (1) nach einem der Ansprüche 9 bis 13, **dadurch gekennzeichnet, dass** die Vorrichtung (1), insbesondere im Fall eines langen Elements (2), zwei Rohre (5) sowie zwei Etuis (7), die in Längsrichtung jeweils gegenüberliegend aneinandergesetzt sind, und demnach zwei in Längsrichtung etwa voneinander abgewandte Zugmittel (11) umfasst.

15. Vorrichtung (1) nach einem der Ansprüche 9 bis 12, **dadurch gekennzeichnet, dass** das Rohr (5) und/oder das Etui (7) Entfernungsmittel (17) nach dem Anbringen durch Trennen und/oder Entfernen in bzw. von zwei Bändern (18) jeweils des Rohrs (5) und/oder des Etuis (7) umfasst, wobei das Rohr (5) und/oder das Etui (7) beispielsweise zwei bis zwölf Bänder (18) umfasst.

16. Vorrichtung (1) nach Anspruch 15, **dadurch gekennzeichnet, dass** die Entfernungsmittel (17) des Rohrs (5) mindestens zwei zu entfernende, etwa in Längsrichtung verlaufende und ursprünglich getrennte Bänder (18) aufweisen, die nebeneinander angeordnet und/oder verbunden sind, wobei die Entfernungsmittel (17) des Rohrs (5) beispielsweise mindestens einen Verbindungsschlitz (19) durch elastisches Verklammern von zu entfernenden Bändern (18), der sich etwa über die gesamte Erzeugende (15) des Rohrs (5) in Längsrichtung (X) erstreckt, umfassen.

17. Vorrichtung (1) nach Anspruch 15 oder 16, **dadurch gekennzeichnet, dass** die Entfernungsmittel (17) des Rohrs (5) mindestens zwei etwa in Längsrichtung verlaufende und zuvor einteilige zu trennende Bänder (18) umfassen, wobei die Bänder (18) beispielsweise über einen bevorzugten Bruchbereich (21) verbunden sind, der in Längsrichtung (X) über die ganze Erzeugende (15) des Rohrs (5) verläuft.

18. Vorrichtung (1) nach einem der Ansprüche 9 bis 17, **dadurch gekennzeichnet, dass** das Rohr (5) Mittel (17) zum Zerstückeln des Rohrs (5) in Längsrichtung in mindestens zwei Abschnitte (20) oder Rohrringe (5) umfasst, wobei das Rohr (5) zwei bis 10 Abschnitte (20) aufweist.

19. Vorrichtung (1) nach Anspruch 18, **dadurch gekennzeichnet, dass** die Zerstückelungsmittel (17) ein Segmentierungssystem umfassen, beispielsweise von zuvor durch elastisches Verklammern verbundenen Abschnitten (20) und/oder von zuvor einteiligen Abschnitten durch Brechen gemäß einem bevorzugten Bereich (21).

20. Vorrichtung (1) nach einem der Ansprüche 1 bis 19, **dadurch gekennzeichnet, dass** das Etui (7) von innen nach hinten verlängert ist, anhand mindestens zweier flexibler Riemen (14), wobei beispielsweise zwei Riemen (14) jeweils am Etui (7) befestigt sind, um zwei Greifhenkel zu bilden, wobei die Befestigungspunkte (25) etwa regelmäßig über den inneren Umfang des hinteren Endes des Etuis (7) verteilt sind.

21. Verbindung (4), erhalten durch Umsetzung des Verfahrens nach einem der Ansprüche 1 bis 9 und/oder mit mindestens einer Vorrichtung (1) nach einem der Ansprüche 10 bis 20.

## Claims

1. A method of placing at least one shrinkable tubular element (2) on a receptacle (3) such as a cable or the like, at a precise destination location and by means of a placing device (1) which comprises at least one hollow rigid tube (5) on the outside of which the element (2) to be placed is initially mounted tensioned, and means (6) of relative sliding with a low coefficient of friction between the tube (5) and the elastic element (2); the method provides for the slipping of the device (1) onto the receptacle (3) so that the element (2) is brought in line with its destination location, and then the removal of the tube (5) so that, gradually as it is withdrawn, the element (2) adapts to the receptacle (3); **characterised in that** the placing of the element (2) is effected whilst maintaining this element (2) at its destination location; and exerting, on traction means (11) comprising essentially a flexible unitary case (7) made from substantially inextensible synthetic material, stretched externally over at least part of the tube (5) in order to form an external free end for receiving the element (2), and internally from a turning-back hem (10) as far as a point close to a rear end or end piece (9) of the tube (5) directly or by means of flexible internal struts, a rearward traction force (X, X') which on the one hand provides the placing of the element (2) on the receptacle (3) and on the other hand causes the simultaneous removal of the tube (5) with the case (7).

2. A method according to Claim 1, **characterised in that**, in particular in the case of a long element (2) with a device (1) comprising two tubes (5) and cases (7) end to end longitudinally substantially facing each other, there is exerted, successively or simultaneously, on two traction means (11) substantially opposite each other longitudinally, respectively a rearward force (X, X'), in a reverse direction.

3. A method according to Claim 1 or 2, **characterised in that**, following the placing of the shrinkable element (2), there is provided a step of removal or discharge of the discharged tube (5) and/or of the removed case (7), by moving away and/or separation of strips (8), the latter over its entire longitudinal dimension (X), along at least one slit (19) able to allow, once separated, the passage through it of the receptacle (3) with the placed element (2).

4. A method according to Claim 3, **characterised in that** the step of removing the tube (5) comprises at least one phase of relative separation, for example tangential, of at least two initially distinct longitudinal strips (18) of tube (5), which previously formed part of or constituted the tube (5), by juxtaposition and/or assembly, for example by elastic clamping.

5. A method according to Claim 3 or 4, **characterised in that** the step of removing the tube (5) comprises at least one phase of mutual separation, for example radial, of at least two edges of unitary longitudinal strips (18), for example connected by a preferential rupture zone (21).

6. A method according to one of Claims 3 to 5, **characterised in that**, the means of removing the case (7) comprising at least two strips (18), the step of traction exerted on the case (7) is in particular effected by the gripping by an operator of strips (18) arranged in a grippable braid.

7. A method according to one of Claims 1 to 6, **characterised in that**, following the placing of the elastic element (2), there is provided a step of longitudinal dividing up of the tube (5) into at least two portions (20) or rings of the tube (5).

8. A method according to Claim 7, **characterised in that** the dividing up step comprises at least one phase of segmentation of portions (20) of tube (5) previously fixed together, for example by elastic clamping and/or portions previously unitary, for example via at least one preferential rupture zone (21).

9. A device (1) for placing at least one shrinkable tubular element (2) on a receptacle (3) such as a cable or the like, at a precise destination location on the receptacle (3), this device (1) comprising at least:
- a hollow rigid tube (5) able to be slipped freely onto the receptacle (3) and on the exterior of which the element (2) to be placed is initially mounted tensioned; and
- means of relative sliding (6) with a low coefficient of friction, temporarily fixed together by gripping and interposed between the tube (5) and the element (2); this device (1) permitting the slipping of the element (2) onto the receptacle (3) in line with its destination location, and then the removal of the tube (5) so that the element (2) adopts the shape of the receptacle (3); **characterised in that** the means (6) of relative sliding comprise a unitary flexible case (7) made from substantially inextensible synthetic material, extended externally over at least part of the tube (5) in order to form an external free end for receiving the element (2), and extended internally from a hem (10) as far as a point close to a rear end or end piece (9) of the tube (5) directly or by means of internal flexible straps (14), in order to form means (11) of traction on the case (7), whilst the external peripheral wall of the tube (5) has substantially no gripping means such as a projection and/or opening-out cavity.

10. A device (1) according to Claim 9, **characterised in that** the external peripheral wall of the tube (5) is substantially smooth and with no discontinuity.

11. A device (1) according to Claim 9 or 10, **characterised in that** the tube (5) has a substantially circular cross-section, transversely to its longitudinal direction (X), and for example cylindrical with a generatrix (15) substantially parallel to this direction (X).

12. A device (1) according to Claim 9 or 10, **characterised in that** the tube (5) has a cross-section, transversely to its longitudinal direction (X), which is substantially polygonal, for example dodecahedral.

13. A device (1) according to one of Claims 9 to 12, **characterised in that** the external peripheral wall of the tube (5) has a generatrix (15) which is inclined from the inside towards the outside radially and from front to rear in a direction (X) of traction of the case (7) in the longitudinal direction, with respect to the latter, by an angle (16) of around 2° to 15°, and for example around 7° to 8°.

14. A device (1) according to one of Claims 9 to 13, **characterised in that**, in particular in the case of a long element (2), the device (1) comprises two tubes (5) as well as two cases (7) end to end longitudinally facing each other respectively, and therefore two traction means (11) which are substantially opposite each other longitudinally.

15. A device (1) according to one of Claims 9 to 12, **characterised in that** the tube (5) and/or the case (7) comprises means of removal (17) after placing by separation of and/or moving apart in at least two strips (18), respectively of the tube (5) and/or of the case (7), for example the tube (5) and/or the case (7) comprises from two to twelve strips (18).

16. A device (1) according to Claim 15, **characterised in that** the means (17) of removing the tube (5) comprise at least two strips (18) to be moved away, substantially longitudinal and initially distinct, for example juxtaposed and/or assembled, for example the means (17) of removing the tube (5) comprise at least one slit (19) for connection by elastic clamping of strips (18) to be moved away, substantially extended over an entire generatrix (15) of the tube (5), in the longitudinal direction (X).

17. A device (1) according to Claim 15 or 16, **characterised in that** the means (17) of removing the tube (5) comprise at least two strips (18) to be separated, substantially longitudinal and previously unitary, for example the strips (18) are connected via a preferential rupture zone (21), substantially extended over an entire generatrix (15) of the tube (5), in the longitudinal direction (X).

18. A device (1) according to one of Claims 9 to 17, **characterised in that** the tube (5) comprises means (17) of longitudinal dividing up (17) of the tube (5), into at least two portions (20) or rings of a tube (5), for example the tube (5) comprises from two to ten portions (20).

19. A device (1) according to Claim 18, **characterised in that** the dividing-up means (17) comprise a system of segmentation, for example of portions (20) previously fixed together by elastic clamping and/or portions previously unitary by rupture along a preferential zone (21).

20. A device (1) according to one of Claims 1 to 19, **characterised in that** the case (7) is internally extended towards the rear by at least two flexible straps (14), for example two straps (14) are each fixed to the case (7) in order to form two gripping handles, the fixing points (25) being substantially distributed regularly on the internal periphery of the rear end of the case (7).

21. An assembly (4) obtained by implementing the method according to one of Claims 1 to 9 and/or comprising at least one device (1) according to one of Claims 10 to 20.
